# EUROPEAN PATENT APPLICATION

(11) **EP 3 121 874 A1**
(43) Date of publication of application: **25.01.2017**
(21) Application number: 15177529.3
(22) Date of filing: 20.07.2015
(51) Int. Cl.: H01M 4/04, H01M 4/131, H01M 4/136, H01M 4/1391, H01M 4/1397, H01M 4/485, H01M 4/505, H01M 4/525, H01M 10/0525, H01M 4/36

(54) **CATHODES FOR LITHIUM ION BATTERIES COMPRISING SOLID LITHIUM OXALATE**

(71) Applicant: BASF SE, 67056 Ludwigshafen am Rhein (DE)
(72) Inventor: Meini, Stefano, Dr., 81545 München (DE); Shin, Ji-Yong, Dr., 68165 Mannheim (DE); Erk, Christoph, Dr., 67067 Ludwigshafen (DE); Solchenbach, Sophie, 80797 München (DE); Schwenke, Katharina, Uta, 85748 Garching (DE); Gasteiger, Hubert, Prof., 80469 München (DE); Lampert, Jordan, 44113 Cleveland (US)
(74) Representative: BASF IP Association

(57) **Abstract**

Cathode for a lithium ion battery, said cathode comprising
(A) a cathode active material in particulate form, said cathode active material being selected from
(α) layered lithium-transition metal oxides of at least one transition metal selected from nickel, cobalt, and manganese,
(β) spinels according to general formula (II),

Li₁₊ₜM¹₂₋ₜO₄ (II)

wherein
t is in the range of from zero to 0,4,
M¹ is nickel or manganese or a combination of nickel and manganese,
(γ) lithium transition metal phosphates with olivine structure,

or a combination of at least two of the foregoing,
(B) lithium oxalate in the form of
(δ) particles with an average diameter in the range of from 10 nm to 1 µm or
(ε) a coating of cathode active material (A), wherein said coating has an average thickness in the range of from 1 nm to 100 nm.

## Description

The present invention is directed towards a cathode for a lithium ion battery, said cathode comprising
(A) a cathode active material in particulate form, said cathode active material being selected from
   (α) layered lithium-transition metal oxides of at least one transition metal selected from nickel, cobalt, and manganese,
   (β) spinels according to general formula (II),

      Li₁₊ₜM¹₂₋ₜO₄ (II)

      wherein
      t is in the range of from zero to 0,4,
      M¹ is nickel or manganese or a combination of nickel and manganese,
   (γ) lithium transition metal phosphates with olivine structure,
   or a combination of at least two of the foregoing,
(B) lithium oxalate in the form of
   (δ) particles with an average diameter in the range of from 10 nm to 1 µm or
   (ε) a coating of cathode active material (A), wherein said coating has an average thickness in the range of from 1 nm to 100 nm.

Furthermore, the present invention is directed to a process to make such inventive cathodes, and to lithium ion batteries comprising such inventive cathodes.

Lithiated transition metal oxides are currently being used as electrode materials for lithium-ion batteries. Extensive research and developmental work has been performed in the past years to improve properties like charge density, energy, but also other properties like the reduced cycle life and capacity loss that may adversely affect the lifetime or applicability of a lithium-ion battery. Various parameters have been found to play important role. Such parameters are not limited to the cathode active material as such. The geometry of the batteries, the anode, separators and electrolyte play important roles as well.

One of the problems encountered in lithium ion batteries is the capacity loss after cycling. Especially in lithium ion batteries that contain a silicon anode or silicon-based anode or lithium metal alloy electrode or graphite electrode, the irreversible capacity loss after the first cycle is pronounced and may amount to up to 25% of the anode's theoretical capacity. This capacity loss is often assigned with an anode protective layer, the so-called solid electrolyte interphase (in brief: SEI) layer that forms around the anode at the expenses of cell's capacity. It contains products formed on reduction of the electrolyte. The SEI, though, traps a certain amount of lithium cations that do not further participate in the intercalation reactions that constitute the charging/discharging of the respective battery but rather behave as "dead material".

On the other hand, the formation of a SEI is desired if it occurs to a certain extent. A certain thickness of SEI leads to a passivation und thus protection of the anode and the electrolyte. An anode in the context of the present invention is understood as the electrode of a battery at which an oxidation reaction takes place upon cell discharge.

D. Shanmukaraj et al., Electrochem. Commun. 2010, 12, 1344 and in US 2013/0298386 disclose methods of compensating lithium ion/capacity loss due to SEI formation by adding a salt as so-called sacrificial additives. The anions of the respective salts may be oxidized, and the lithium cations may again participate in the intercalation reaction. However, in Electrochem. Commun. 2010, 12, 1344 D. Shanmukaraj *et al.* state that lithium oxalate does not have any electrochemistry in aprotic solvents due to insolubility, see page 1345. US 2013/0298386 does not contain any example showing the electrochemical behavior of lithium oxalate.

It is an objective of the present invention to provide a battery with improved cycle stability and, in particular, with a reduced loss of capacity in the course of the first cycling.

Without wishing to be bound by any theory, it appeared desirable to prevent excessive capacity loss due to SEI formation in a lithium ion battery, especially when cycling is performed at high voltage.

Accordingly, the cathodes defined at the outset have been found, hereinafter also being referred to as inventive cathodes or cathodes according to the (present) invention.

Inventive cathodes comprise
(A) a cathode active material cathode active material in particulate form, hereinafter also being referred to as cathode active material (A), and
(B) lithium oxalate, hereinafter also being referred to as lithium oxalate (B).

Both cathode active material (A) and lithium oxalate (B) will be described in more detail below.

Cathode active material (A) may be selected from
(α) layered lithium-transition metal oxides of at least one transition metal selected from nickel, cobalt, and manganese, hereinafter also being referred to as layered oxides (α),
(β) spinels according to general formula (II), hereinafter also referred to as spinels (β),

   Li₁₊ₜM¹₂₋ₜO₄ (II)

   wherein
   t is in the range of from zero to 0,4,
   M¹ is nickel or manganese or a combination of nickel and manganese,
(γ) lithium transition metal phosphates with olivine structure, hereinafter also being referred to as olivines (γ),
or a combination of at least two of the foregoing, for example a combination of a layered oxide (α) and an olivine (γ), or a combination of a layered oxide (α) and a spinel (β), or a combination of a spinel (β) and an olivine (γ). Further combinations include combinations of two different layered oxides (α), for example a combination of LiCoO₂ and a layered oxide according to formula (I), see below.

Examples of layered oxides (α) are LiCoO₂, LiMnO₂, LiNiO₂, LiNiᵣMn₁₋ᵣO₂, LiNiᵣCo₁₋ᵣO₂, LiCoᵣMn₁₋ᵣO₂, each with r in the range of from 0.01 to 0.99, preferably 0.05 to 0.95. Further examples of layered oxides (α) are lithium nickel cobalt aluminum oxides, the latter being materials of general formula Li_{(1+g)}[NiₕCoᵢAlⱼ]_{(1-g)}O₂. Typical values for g, h, i, and j are: g is in the range from 0 to 0.1, h is in the range from 0.8 to 0.85, i is in the range from 0.15 to 0.20, and j is in the range from 0.02 to 0.03.

In one embodiment of the present invention, layered oxides (α) are selected from layered lithium nickel-cobalt-manganese oxides of general formula (I)

Li₁₊ₓ(NiₐCo_{b}Mn_{c}M²_{d})₁₋ₓO₂ (I)

wherein
M² is selected from Al, Ti, Zr and W,
x is in the range of from zero to 0.1, preferably 0.015 to 0.05,
a is in the range of from 0.3 to 0.95, preferably 0.4 to 0.6,
   b is in the range of from 0.05 to 0.35, preferably 0.1 to 0.25,
   c is in the range of from zero to 0.35, preferably 0.2 to 0.35,
   d is in the range of from zero to 0.05,
with a + b + c + d = 1.

In one embodiment of the present invention, the surface (BET) of layered oxide (α) is in the range of from 0.2 to 10 m²/g, preferably from 0.3 to 1.0 m²/g. The surface (BET) can be determined by nitrogen absorption, for example according to DIN ISO 9277 of the year 1995.

In one embodiment of the present invention, the particle diameter (D50) of secondary particles of layered oxide (α) is in the range from 6 to 16 µm, especially 7 to 9 µm. The mean particle diameter (D50) in the context of the present invention refers to the median of the volume-based particle diameter, as can be determined, for example, by light scattering.

Examples of spinels (β) are those of general formula (II)

Li₁₊ₜM¹₂₋ₜO₄ (II)

t is in the range of from zero to 0,4,

M¹ is nickel or manganese or a combination of nickel and manganese. Particularly preferred examples of spinels (β) are LiNi_{0,5}Mn_{1,5}O₄, LiNi_{0,48}Mn_{1,52}O₄ and LiNi_{0,52}Mn_{1,48}O₄.

The average particle diameter of spinels (β) may, for example, be in the range of from 2 to 10 µm, preferably 10 to 16 µm.

Olivines (γ) may be selected from lithiated transition metal phosphates including at least one transition metal, for example LiMnPO₄ LiFePO₄ and LiCoPO₄. Preferred are lithium iron phosphates, often also referred to as LFP.

In one embodiment of the present invention, olivines (γ) are selected from those of the general formula (III)

LiFe_{(1-y)}M³_{y}PO₄ (III)

y is in the range of from zero to 0.4

M³ is at least one element selected from Co, Mn, Ni, V, Mg, Nd, Zn and Y, preferred are Co and Mn and combinations of Co and Mn.

Olivines (γ) may be applied in pure form or in combination with up to 5 % by weight of a lithium phosphate, for example Li₃PO₄ or Li₂P₂O₇, or in combination with an iron-phosphorus compound other than olivine, for example FePO₄ or Fe₃(PO₄)₂.

Olivines (γ) may contain carbon or be coated with carbon, said carbon being in electrically conductive form. Said carbon may form a coating of the particles of olivine (γ).

In one embodiment of the present invention, the surface (BET) of olivine (γ) is in the range of from 5 to 35 m²/g, preferably 7 to 15 m²/g.

In one embodiment of the present invention, primary particles of olivine (γ) have an average diameter in the range from 1 to 2000 nm, preferably from 10 to 1000 nm, particularly preferably from 50 to 500 nm. The average primary particle diameter can, for example, be determined by SEM or TEM, or by XRD methods. Such XRD methods preferably use the Scherrer Equation where the peak width is inversely proportional to crystallite size.

In one embodiment of the present invention, olivine (γ) is in the form of agglomerates of primary particles, such agglomerates having an average diameter (d50) in the range of from 1 µm to 10 µm, preferably 2 to 5 µm.

Particles of cathode active material (A) are preferably spherical particles, that means they are particles having a spherical shape. Spherical particles shall include not just those which are exactly spherical but also those particles in which the maximum and minimum diameter of at least 90% (number average) of a representative sample differ by not more than 10%. In a preferred embodiment of the present invention, cathode active material (A) essentially consists of spherical particles, meaning in the context of the present invention that at least 95% of the particles are spherical.

Inventive cathodes further contain lithium oxalate (B). Lithium oxalate (B) is present in the inventive cathode in the form of
(δ) particles with an average diameter in the range of from 10 nm to 1 µm, preferably 50 to 500 nm, hereinafter also referred to as particles (δ) or particles of lithium oxalate (B), or of
(ε) a coating of cathode active material (A), wherein said coating has an average thickness in the range of from 1 nm to 100 nm, preferably 2 to 50 nm. Said coating may be referred to as coating (ε).

Lithium oxalate (B) may be in so-called analytically pure form, for example of a purity of 99.9% by weight or more, or it may contain one or more detectable impurities or additives. In one embodiment of the present invention, lithium oxalate contains up to 5 % by weight of an oxalate other than lithium oxalate, for example sodium oxalate, potassium oxalate, calcium oxalate or magnesium oxalate, each of them deliberately added or as an impurity.

The average diameter of particles (δ) refers to D50, also referred to as d₅₀, preferably determined by light scattering. Particles (δ) may, for example, be made by adjusting the particle size of freshly precipitated lithium oxalate, or by adjusting the particle size of commercially available particles of lithium oxalate. Said adjusting may be carried out, for example, in a ball-mill or in an impact crusher.

Coating (ε) may be obtained, for example, by *in situ* preparation of lithium oxalate (B). It is possible, for example, to react oxalic acid with an excess lithium hydroxide or lithium carbonate that is in some embodiments on particles of layered oxide (α) or of olivine (γ) or of spinel (β). In other embodiments, coating (ε) may be made by precipitation of lithium oxalate (B) from solution onto the active material, or by precipitation of lithium oxalate (B) from lithium hydroxide solution by addition of oxalic acid. The thickness of coating (ε) may be determined, e.g., by SEM or TEM. The weight percentage of lithium oxalate may be determined, e.g., by thermogravimetric analysis ("TGA").

In one embodiment of the present invention, essentially all particles of cathode active material (A) comprise a coating (ε), for example more than 95% to 100%, percentages in this paragraph referring to number percentages. In other embodiments, some particles comprise a coating (ε) and others do not, for example 35 up to 95% comprise a coating (ε).

In one embodiment of the present invention, the content of lithium oxalate (B) in inventive cathodes is in the range of from 0.01 to 20 % by weight, referring to the respective cathode active material (A). In other words, the weight ratio of cathode active material (A) to lithium oxalate (B) is in the range of from 9999 to 1 to 4 to 1. If the weight ratio of cathode active material (A) to lithium oxalate (B) is below 4:1 there may be too little cathode active material, and conductivity and capacity are too low. If the weight ratio of cathode active material (A) to lithium oxalate (B) exceeds 9999:1 significantly then the lithium oxalate may be dissolved in the electrolyte and can only maintain its beneficial effect to a low extent. Preferably, the content of lithium oxalate (B) in inventive cathodes is in the range of from 1 to 10 % by weight, referring to the respective cathode active material (A).

In one embodiment of the present invention, inventive cathodes further comprise
(C) carbon in electrically conductive form, in the context of the present invention also being referred to as carbon (C), and/or
(D) a binder.

In one example of the present invention, cathodes according to the present invention contain carbon in electrically conductive modification, in brief also referred to as carbon (C). Carbon (C) may be selected from soot, active carbon, carbon nanotubes, carbon fibres, graphene, and graphite. Carbon (C) can be added as such during preparation of cathode materials according to the invention, or it can be manufactured *in situ* together with, for example, olivine (γ), for example by adding an organic compound and calcining any precursor of olivine (γ)together with said organic compound. Polymeric organic compounds are preferred examples of organic compounds that may serve as a carbon source.

In an embodiment of the present invention, carbon (C) has an average primary particle diameter in the range from 1 to 500 nm, preferably in the range from 2 to 100 nm, particularly preferably in the range from 3 to 50 nm, very particularly preferably in the range from 4 to 10 nm.

In another embodiment of the present invention, carbon (C) is present as a coating of olivine (γ).

In one embodiment of the present invention, inventive cathodes contain cathode active material (A) and carbon (C) in weight ratio in the range of from 100:1 to 10:1, preferably 98:1 to 25:1. Higher amounts of carbon may limit the capacity. Lower amounts may not have a positive effect on conductivity.

In one example of the present invention, cathodes according to the present invention contain a binder, in the context of the present invention also being referred to as binder (D).

Suitable binders (D) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (D) is polybutadiene.

Other suitable binders (D) are selected from polyethylene oxide (PEO), cellulose, carboxymethylcellulose, polyimides and polyvinyl alcohol.

In one embodiment of the present invention, binder (D) is selected from those (co)polymers which have an average molecular weight M_{w} in the range from 50,000 to 1,000,000 g/mol, preferably to 500,000 g/mol.

Binder (D) may be cross-linked or non-cross-linked (co)polymers.

In a particularly preferred embodiment of the present invention, binder (D) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (D) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s) (D), referring to cathode active material (A).

Inventive cathodes may further contain a current collector, for example an aluminum foil. Said aluminum foil may have a thickness in the range of from 10 to 50 µm, preferably 25 to 35 µm.

Inventive cathodes may be implemented into any type of lithium-ion batteries. If implemented into a lithium-ion battery they lead to improved cycle stability and, in particular, to a reduced loss of capacity in the course of the first cycling.

Another aspect of the present invention is a process for making inventive cathodes, in the context of the present invention generally referred to as inventive process.

In one embodiment of the present invention, the inventive process comprises the following steps:
(a) providing a slurry comprising lithium oxalate with an average particle diameter in the range of from 10 nm to 1 µm, cathode active material (A), at least one organic solvent, optionally, carbon in electrically conductive form (C), and, optionally, at least one binder (D), and
(b) applying said slurry to a current collector.

The measures under (a) and (b) are also referred to as step (a) and step (b), respectively.

In an alternative embodiment of the present invention, the inventive process comprises the following steps
(a') providing a slurry comprising cathode active material (A) coated with lithium oxalate wherein said coating has an average thickness in the range of from 1 nm to 100 nm, at least one organic solvent, optionally, carbon in electrically conductive form (C), and, optionally, at least one binder (D), and
(b') applying said slurry to a current collector.

The measures under (a') and (b') are also referred to as step (a') and step (b'), respectively.

The manufacture of lithium oxalate (δ) has been described above. In order to perform step (a) of the inventive process, the desired compounds may be slurried in an organic solvent in the desired proportions, for example

cathode active material (A) and carbon (C) in weight ratio in the range of from 100:1 to 10:1, preferably 98:1 to 25:1, as particles (δ) or as coating ε),
cathode active material (A) to lithium oxalate (B) is in the range of from 9999 to 1 to 4 to 1, and 1 to 15% by weight of binder(s) (D), referring to cathode active material (A).

Said slurry may have a total solids content in the range of 25-75 %, preferably 50-70%.

The slurry is made with a non-aqueous medium as continuous phase. The term "non-aqueous" implies in the context of the slurry in step (a) or (a') that the water content is low, for example less than 1 % by volume, preferably in the range of from 10 to 50 ppm by weight, referring to the sum of water and organic solvent.

In a preferred embodiment of the present invention, said organic solvent is aprotic, that means in the context of the present invention, it bears neither OH groups nor SH groups nor N-H groups. Its boiling point at normal pressure is preferably lower than 250°C, otherwise its removal becomes too tedious. For safety reasons, a boiling point of at least 100°C is preferred.

In a preferred embodiment, lithium oxalate (B) has a solubility in said organic solvent of less than 40 g/l, measured at ambient temperature, preferred are less than 10 g/l. Examples of suitable solvents are dimethyl formamide, dimethyl acetamide, tetramethyl urea, dimethyl sulfoxide, N-methyl-2-pyrrolidone ("NMP) and N-ethyl-2-pyrrolidone ("NEP"), and tri-C₁-C₄-alkyl phosphate, for example trimethyl phosphate and triethyl phosphate.

In a preferred embodiment of the present invention, said organic solvent is selected from NMP and NEP and triethyl phosphate.

In a preferred embodiment of the present invention, said slurry is applied to a current collector or to a separator foil with the aid of a doctor blade, slot nozzle, a gap bar, a Mayer rod or an automatic coater.

Generally, the organic solvent is removed after step (b) or (b'), respectively, for example by drying in a heating oven or in a vacuum oven. During removal of the organic solvent a temperature of 200°C is not exceeded.

By the inventive process inventive cathodes may be readily manufactured.

Another aspect of the present invention is the use of inventive cathodes in an electrochemical cell. At least two of such electrochemical cells may be incorporated a lithium ion battery. Said lithium ion battery, hereinafter also referred to as inventive battery, displays to improved cycle stability and, in particular, to a reduced loss of capacity in the course of the first cycling. A further aspect of the present invention relates to a method of manufacturing an inventive battery by combining an inventive cathode with an anode, an electrolyte and, if applicable, a separator.

Anode in the context of the present invention may contain at least one anode active material, such as carbon (graphite), TiO₂, lithium titanium oxide, silicon or tin. Anodes may additionally contain a current collector, for example a metal foil such as a copper foil.

Electrolytes in the context of the present invention may comprise at least one non-aqueous solvent, at least one electrolyte salt and, optionally, additives.

Nonaqueous solvents for electrolytes can be liquid or solid at room temperature and are preferably selected from among polymers, cyclic or acyclic ethers, cyclic and acyclic acetals and cyclic or acyclic organic carbonates and combinations of at least two of the foregoing.

Examples of suitable polymers are, in particular, polyalkylene glycols, preferably poly-C₁-C₄-alkylene glycols and in particular polyethylene glycols. Polyethylene glycols can here comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate, and fluorinated derivatives of the foregoing.

Examples of suitable cyclic organic carbonates are compounds of the general formulae (IV) and (V) 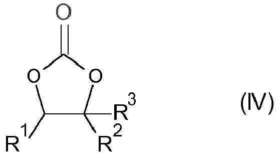 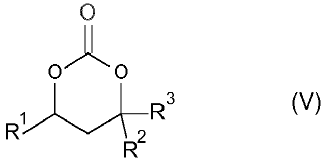 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

Another preferred cyclic organic carbonate is fluorinated ethylene carbonate, formula (VI).

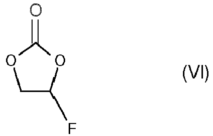

The solvent or solvents is/are preferably used in the water-free state, i.e. with a water content in the range from 1 ppm to 0.1 % by weight, which can be determined, for example, by Karl-Fischer titration.

Electrolytes further comprise at least one electrolyte salt. Suitable electrolyte salts are, in particular, lithium salts. Examples of suitable lithium salts are LiPF₆, LiBOB, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In an embodiment of the present invention, batteries according to the invention comprise one or more separators by means of which the electrodes are mechanically separated. Suitable separators are polymer films, in particular porous polymer films, which are unreactive towards the electrolyte and the electrode and in special cases towards metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 55%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk. In one variant, a metal foil configured as a pouch is used as housing.

Batteries according to the invention display a good discharge behavior, for example at low temperatures (zero °C or below, for example down to -10°C or even less), a very good discharge and cycling behavior, in particular at high temperatures (45 °C or higher, for example up to 60°C) in particular with respect to the capacity loss, and a good safety behavior at high temperatures such as 60°C or more. Preferably, also the cycle stability and the C-rate capacity behavior are improved, or they are at least identical.

Batteries according to the invention may comprise two or more electrochemical cells that are combined with one another, for example they can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those that move manually, for example computers, especially laptops, telephones or electric hand tools, for example in the building sector, especially drills, battery-powered screwdrivers or battery-powered staplers.

A further aspect of the present invention relates to a component of an electrochemical cell, hereinafter also being referred to as inventive component, comprising
(A) a cathode active material in particulate form, said cathode active material being selected from
(α) layered lithium-transition metal oxides of at least one transition metal selected from nickel, cobalt, and manganese,
(β) spinels according to general formula (II),

   Li₁₊ₜM¹₂₋ₜO₄ (II)

   wherein
   t is in the range of from zero to 0,4,
   M¹ is nickel or manganese or a combination of nickel and manganese,
(γ) lithium transition metal phosphates with olivine structure,
   or a combination of at least two of the foregoing,
(B) lithium oxalate in the form of
(δ) particles with an average diameter in the range of from 10 nm to 1 µm or
(ε) a coating of cathode active material (A), wherein said coating has an average thickness in the range of from 1 nm to 100 nm.

Layered oxides (α), spinels (β) and olivines (γ) have been described in more detail above.

In a preferred embodiment of the present invention, the content of lithium oxalate (B) is in the range of from 0.01 to 20 % by weight, referring to the total respective cathode active material (A), preferably 1 to 10% by weight.

In a preferred embodiment of the present invention, olivine (γ) is selected from those of the general formula (III)

LiFe_{(1-y)}M³_{y}PO₄ (III)

y is in the range of from zero to 0.4
M³ is at least one element selected from Co, Mn, Ni, V, Mg, Nd, Zn and Y, preferred are Co and
Mn and combinations of Co and Mn.

In a preferred embodiment of the present invention, layered oxides (α) are selected from layered lithium nickel-cobalt-manganese oxides of general formula (I)

Li₁₊ₓ(NiₐCo_{b}Mn_{c}M²_{d})₁₋ₓO₂ (I)

wherein
M² is selected from Al, Ti, Zr and W,
x is in the range of from zero to 0.1, preferably 0.015 to 0.05,
a is in the range of from 0.3 to 0.95, preferably 0.4 to 0.6,
   b is in the range of from 0.05 to 0.35, preferably 0.1 to 0.25,
   c is in the range of from zero to 0.35, preferably 0.2 to 0.35,
   d is in the range of from zero to 0.05,
with a + b + c + d = 1.

Inventive components may advantageously be used for making an inventive cathode.

The present invention is further illustrated by working examples.

### Working examples

### I. Manufacture of lithium oxalate (B.1)

An amount of 2 g of commercially available lithium oxalate (LO, Alfa Aesar, 99%, d₅₀: 40 µm, was ballmilled in 2 ml of N-methyl-2-pyrrolidone (NMP, Sigma-Aldrich) until an average particle size of 0.2 µm (determined by dynamic light scattering) was reached. Lithium oxalate (B.1) was obtained.

### I. Manufacture of cathodes and anodes

The following materials were used:
(A.1): spinel (β.1) of formula LiNi_{0.5}Mn_{1.5}O₄
(C.1): carbon black, BET area 62 m²/g, (commercially available as Super C65, TIMCAL)
(C.2): graphite (SLP30, Timcal)
(D.1): polyvinylidenfluoride (PVdF, manufactured by Solef)

### I.1 Manufacture of inventive cathodes (cath.1)

Spinel cathodes containing lithium oxalate (B.1) were prepared by first dispersing 97.5 mg carbon black (Super C65, TIMCAL) and 97.5 mg of lithium oxalate (B.1) in 3.2 g of NMP with an ultrasonication horn. Then 3.512 g spinel (β.1) of formula LiNi_{0.5}Mn_{1.5}O₄ (A.1), 197 mg (D.1) as binder and additional 3.2 g of NMP were added and the resultant ink was mixed in a planetary mixer (2000 rpm, 15 min). The resultant lump-free ink was coated onto aluminum foil with a gap bar to result in a film with 250 µm wet film thickness. The coated aluminum foil was dried in a convection oven at 50°C. Cathodes were punched out, (Ø 14 mm). Inventive cathodes (cath.1) were obtained. Inventive cathodes (cath.1) had a weight composition (A.1)/(B.1)/(C.1)/(D.1) of 87.8/2.44/4.88/4.88, corresponding to percentages 90/2.5/5/5. The resultant loading was 8.6 to 8.9 mg (A.1)/cm².

### 1.2 Manufacture of a comparative cathode c-(cath.2)

Comparative spinel electrodes were prepared exactly as in II.1 but instead of (B.1), commercially available lithium oxalate with d₅₀ = 40 µm was used. The resulting loading for c-(cath.2) on was 8.6 to 9.1 mg (A.1)/cm². All electrodes were dried after punching (Ø 14 mm) at 95 °C under dynamic vacuum prior to use. Comparative cathodes c-(cath.2) had a weight composition (A. 1)/(B.1)/(C.1)/(D.1) of 87.8/2.44/4.88/4.88 corresponding to 90/2.5/5/5.

### I.3 Manufacture of graphite anodes

Graphite anodes were prepared by mixing 2.7 g graphite (C.2, SLP30, Timcal) and 0.3 g PvdF with 6.6 g NMP in a planetary mixer (2000 rpm, 10 min). The resulting slurry was coated onto copper foil (MTI) using a 150 µm gap bar and dried at 50 °C in a convection oven. Graphite anodes were punched into 15 mm discs and dried at 120 °C under dynamic vacuum prior to use.

### II. Cell assembly and cycling

2032 coin cells were built with graphite anodes and with either inventive or comparative cathodes. To confirm reproducibility, duplicate cells of each type were built. All electrodes were dried at 120 °C under dynamic vacuum prior to assembly. The cells were assembled in a glove-box (MBraun, Germany) where moisture and oxygen levels were kept under 0.1 ppm. The cells were assembled with 1 glass fiber separator (Ø 17 mm) wetted with 90 µL LP57 electrolyte (EC:EMC 3:7, 1 M LiPF₆, BASF). The cells were cycled according to the procedure in Table 1. The current is given in multiples of C, which is the current that corresponds to a full charge or discharge of the theoretical capacity in one hour. The discharge capacities during cycling of cells with inventive and comparative cathodes are given in Table 2. The differences between duplicate cells were less than 0.75% in all cases.

**Table 1: cycle parameters**

| Cycle [#] | C-rate [1/h] | Cell potential [V] | Charge | Discharge |
|---|---|---|---|---|
| 1 | 0.1 | 3.5-5 | CCCV | CC |
| 2-3 | 0.1 | 3.5-4.9 | CCCV | CC |
| 4-100 | 0.5 | 3.5-4.9 | CCCV | CC |

**Table 2: Capacities and coulombic efficiencies during cycling**

| Parameter | Cell with (cath.1) | Cell with c-(cath.2) |
|---|---|---|
| First cycle charge capacity [mAh_{LMNO}/g] | 154.8 | 148.2 |
| First cycle discharge capacity [mAh_{LMNO}/g] | 132.7 | 124.6 |
| First cycle coulombic efficiency [%] | 85.75 | 84.10 |
| 10th cycle discharge capacity [mAh_{LMNO}/g] | 128.7 | 120.8 |
| 25th cycle discharge capacity [mAh_{LMNO}/g] | 125.4 | 117.6 |
| 50th cycle discharge capacity [mAh_{LMNO}/g] | 121.3 | 113.3 |
| 90th cycle discharge capacity [mAh_{LMNO}/g] | 116.4 | 108.0 |

## Claims

1. Cathode for a lithium ion battery, said cathode comprising
(A) a cathode active material in particulate form, said cathode active material being selected from
(α) layered lithium-transition metal oxides of at least one transition metal selected from nickel, cobalt, and manganese,
(β) spinels according to general formula (II),
Li₁₊ₜM¹₂₋ₜO₄ (II)
wherein
t is in the range of from zero to 0,4,
M¹ is nickel or manganese or a combination of nickel and manganese,
(γ) lithium transition metal phosphates with olivine structure,
or a combination of at least two of the foregoing,
(B) lithium oxalate in the form of
(δ) particles with an average diameter in the range of from 10 nm to 1 µm or
(ε) a coating of cathode active material (A), wherein said coating has an average thickness in the range of from 1 nm to 100 nm.

2. Cathode according to claim 1 wherein said cathode additionally comprises
(C) carbon in electrically conductive form,
(D) a binder.

3. Cathode according to claim 1 or 2 wherein layered lithium-transition metal oxides (α) are selected from layered lithium nickel-cobalt-manganese oxides of general formula (I)
Li₁₊ₓ(NiₐCo_{b}Mn_{c}M²_{d})₁₋ₓO₂ (I)
wherein
M² is selected from Al, Ti, Zr and W,
x is in the range of from zero to 0.1,
a is in the range of from 0.3 to 0.95,
b is in the range of from 0.05 to 0.35,
c is in the range of from zero to 0.35,
d is in the range of from zero to 0.05,
with a + b + c + d = 1.

4. Cathode according to claim 1 or 2 wherein lithium transition metal phosphates with olivine structure (γ) are selected from those of the general formula (III)
LiFe_{(1-y)}M³_{y}PO₄ (III)
y is in the range of from zero to 0.4
M³ is at least one element selected from Co, Mn, Ni, V, Mg, Nd, Zn and Y.

5. Cathode according to claim 1 or 2 wherein lithium-containing spinel (β) is selected from LiNi_{0,5}Mn_{1,5}O₄, LiNi_{0,48}Mn_{1,52}O₄ and LiNi_{0,52}Mn_{1,48}O₄.

6. Cathode according to any of the preceding claims wherein the content of lithium oxalate (B) in the cathode is in the range of from 0.01 to 20 % by weight, referring to the respective cathode active material (A).

7. Process for making a cathode according to any of the preceding claims comprising the following steps:
(a) providing a slurry comprising lithium oxalate with an average particle diameter in the range of from 10 nm to 1 µm, cathode active material (A), at least one organic solvent, optionally, carbon in electrically conductive form (C), and, optionally, at least one binder (D), and
(b) applying said slurry to a current collector.

8. Process for making a cathode according to any of claims 1 to 6 comprising the following steps:
(a') providing a slurry comprising cathode active material (A) coated with lithium oxalate wherein said coating has an average thickness in the range of from 1 nm to 100 nm, at least one organic solvent, optionally, carbon in electrically conductive form (C), and, optionally, at least one binder (D) and
(b') applying said slurry to a current collector.

9. Process according to claim 7 or 8 wherein said slurry is applied to a current collector or to a separator foil with the aid of a doctor blade, a Mayer rod or an automatic coater.

10. Process according to any of claims 7 to 9 wherein said organic solvent is selected from N-methyl-2-pyrrolidone, N-ethyl-2-pyrrolidone, and triethyl phosphate.

11. Use of a cathode according to any of claims 1 to 6 in a lithium ion battery.

12. Component comprising
(A) a cathode active material in particulate form, said cathode active material being selected from
(α) layered lithium-transition metal oxides of at least one transition metal selected from nickel, cobalt, and manganese,
(β) spinels according to general formula (II),
Li₁₊ₜM¹₂₋ₜO₄ (II)
wherein
t is in the range of from zero to 0,4,
M¹ is nickel or manganese or a combination of nickel and manganese,
(γ) lithium transition metal phosphates with olivine structure,
or a combination of at least two of the foregoing,
(B) lithium oxalate in the form of
(δ) particles with an average diameter in the range of from 10 nm to 1 µm or
(ε) a coating of cathode active material (A), wherein said coating has an average thickness in the range of from 1 nm to 100 nm.

13. Component according to claim 12 wherein the content of lithium oxalate (B) is in the range of from 0.01 to 20 % by weight, referring to the total respective cathode active material (A).

14. Component according to claim 12 or 13 wherein lithium transition metal phosphates with olivine structure (γ) are selected from those of the general formula (III)
LiFe_{(1-y})M³_{y}PO₄ (III)
y is in the range of from zero to 0.4
M³ is at least one element selected from Co, Mn, Ni, V, Mg, Nd, Zn and Y.

15. Component according to claim 12 or 13 wherein layered lithium-transition metal oxides (α) are selected from layered lithium nickel-cobalt-manganese oxides of general formula (I)
Li₁₊ₓ(NiₐCo_{b}Mn_{c}M²_{d})₁₋ₓO₂ (I)
wherein
M² is selected from Al, Ti, Zr and W,
x is in the range of from zero to 0.1,
a is in the range of from 0.3 to 0.95,
b is in the range of from 0.05 to 0.35,
c is in the range of from zero to 0.35,
d is in the range of from zero to 0.05,
with a + b + c + d = 1.
